(19) Europäisches Patentamt
European Patent Office
Office européen des brevets

(11) Publication number: **0 050 976**
**B1**

(12) # EUROPEAN PATENT SPECIFICATION

(45) Date of publication of patent specification: **05.02.86**

(51) Int. Cl.$^4$: **H 01 M 6/18**

(21) Application number: **81305017.6**

(22) Date of filing: **23.10.81**

(54) **Solid state electrolytes for electrochemical cells.**

(30) Priority: **24.10.80 US 200278**

(43) Date of publication of application:
**05.05.82 Bulletin 82/18**

(45) Publication of the grant of the patent:
**05.02.86 Bulletin 86/06**

(84) Designated Contracting States:
**DE FR GB**

(56) References cited:
**FR-A-2 428 617**
**US-A-4 009 092**

**MAT. RES. BULL, Vol. 14, 1979, Pergamon Press, US, J.P. MALUGANI et al. "Conductivé ionique dans les verres LiPO3-LiX (X-I, Br, C1)", pages 1075-1081**
**SOLID STATE IONICS, vol. 1, no. 3, August 1980, Amsterdam, NL, J.G. KAMPHORST et al. "Fast Li ionic conduction in solid solutions of the system Li4GeO4-Li2ZnGeO4-Li3PO4", pages 187-197**

(73) Proprietor: **RAYOVAC Corporation**
**101 East Washington Avenue**
**Madison Wisconsin 53703 (US)**

(72) Inventor: **Joshi, Ashok Vendimadhav**
**117 Shankar Niwas Shivaji Park Road No. 3**
**Bombay (IN)**
Inventor: **Sholette, William Paul**
**826 Martha Lane**
**Warminister Pennsylvania 18974 (US)**
Inventor: **Jatkar, Arun D.**
**43 St. Johns Street**
**Goshen New York 10924 (US)**

(74) Representative: **Behrens, Dieter, Dr.-Ing. et al**
**Patentanwälte WUESTHOFF-V. PECHMANN-BEHRENS-GOETZ Schweigerstrasse 2**
**D-8000 München 90 (DE)**

**EP 0 050 976 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention is concerned with solid state electrolytes containing lithium and iodine suitable for use in solid state electrochemical cells having lithium anodes and operating, at least in part, through lithium ion transport in the electrolyte.

The present invention is also concerned with solid state electrochemical cells employing lithium metal (or alloy) anodes. In a solid state electrochemical cell the utility of the cell with a given cathode and anode is greatly influenced by the characteristics of the electrolyte. A suitable electrolyte must be an electronic insulator and an electrolytic conductor. The greater the electrolytic conductivity of the electrolyte, all other factors being equal, the greater is the allowable current drain from the cell and the less is the internal resistance of the cell. The present invention provides solid state electrolytes having high electrolytic conductivity as well as high electronic resistivity.

It has now been discovered that by means of a combination of lithium, phosphate and iodide and either calcium or aluminium or both a novel, highly advantageous solid state electrolyte can be provided.

According to the present invention, there is provided a solid sate electrolyte for use in solid state electrochemical cell having a lithium anode, which electrolyte comprises, in mole percent, from 10 to 50% iodine, from 8 to 47% lithium, from 3 to 16% phosphate, and from 5 to 30% in total of one or both of calicum and aluminium, said electrolyte being in the form of an interdiffused composition of said constituents and said constituents being in stoichiometric metallic to non-metallic relationship.

The solid state electrolytes of the present invention include as essential ingredients lithium, phosphate and iodine and either calcium or aluminium or both in stoichiometric relationship metallic to non-metallic. The constituents may have the form of atoms and radicals and any combination of atoms or radicals. The term "solid state" is employed in the sense that the electrolyte, as a whole, has a stable shape and volume at ambient temperatures at which the cell is used. The use of the term "solid state" does not imply the total absence of any phase or phases in the electrolyte composition which might be technically describable as liquid or pasty at the temperature of use of the electrolyte. The electrolytes are in the form of an interdiffused body (or compressed mass) of chemical compounds (or the elements) which are the sources of the moieties. In addition to the aforelisted constituents the electrolytes of the present invention may contain from 0 to 38 mole percent of oxygen (based on atomic rather than molecular oxygen).

The solid electrolytes of the present invention may be made by dry blending powders of lithium orthophosphate, together with one or more of calcium iodide, lithium aluminium iodide and aluminium iodide and, if desired, one or both of aluminium oxide and lithium iodide. The dry-blended powder should then be heated to cause interdiffusion or reaction between or among the ingredients (usually at a temperature above the melting point of the lowest melting of the ingredients) for a period of time of about 0.25 to about 3 or more hours. The thus reacted material is then cooled and ground to a powder and pressed to a suitable shape.

If the electrolyte is to be free of oxygen (except for the oxygen present in the phosphate), it is preferably prepared by interdiffusing a mixture of 20 to 55 mole percent lithium orthophosphate with the balance being one or more of aluminium iodide, lithium aluminium iodide and calcium iodide. If the electrolyte is to contain oxygen (again apart from that present in the phosphate) up to 60 mole percent aluminium oxide may be diffused with a mixture of lithium orthophosphate and one or more of calcium iodide, lithium aluminium iodide and aluminium iodide, and optionally with lithium iodide.

For the purposes of the above ranges, the aluminum constituent is to be treated as a single entity even though, in compositions made from aluminium iodide and aluminium oxide, the aluminium is divided among the species aluminium phosphate, aluminium oxide and perhaps other aluminium-containing phases.

All operations starting from blending dried powders are generally carried out in an inert dry atmosphere. It will be appreciated that the composition of the final electrolyte will not necessarily be the same as that of the initial ingredients. For example, if lithium phosphate (having a lithium ion conductivity of about $10^{-14}$ (ohm-cm)$^{-1}$) and calcium iodide (not a lithium ion conductor) are initial ingredients, the final composition will likely contain not only these ingredients but also calcium orthophosphate and lithium iodide, the formation of which is indicated by the following equation

$$2Li_3PO_4+3CaI_2 \rightarrow Ca_3(PO_4)_2+6LiI$$

The actual final composition of the electrolyte will vary depending not only on the proportions of the original reactants but also on the degree of approach to equilibrium permitted by the heating operation described hereinbefore and any side reactions which may occur.

When making electrolytes according to the present invention, it is advantageous to employ an initial powder mixture containing, in mole percent, from 27% to 50% of lithium orthophosphate, and from 50% to 73% of calcium iodide. These proportions of the constituents produce electrolytes containing, in mole percent, from 25 to 43% lithium, from 8% to 14.5% phosphate, about 14 to 23% calcium and 28 to 45% iodine. It is to be noted that if aluminium oxide is to be added to the composition, it is not necessary that this material be present in the

original powder mixture. One can, if desired, initially heat the other ingredients of the powder mixture together, cool the heated mixture, grind the heated and cooled mixture to powder and thereafter blend that powder with aluminium oxide and reheat the blend to interdiffuse or interreact the originally heat treated powder with the alumina.

Another advantageous electrolyte of the present invention is made by blending and heating (amounts in mole percent) from 18% to 50% of lithium phosphate, from 18% to 50% lithium aluminium iodide, and up to 60% aluminium oxide. Again, aluminium oxide can be included originally in the powder blend or it can be separately heated with the other pre-reacted (or pre-diffused) ingredients. Furthermore, the blended ingredients can contain lithium and iodide moieties in excess of those present in the lithium aluminium iodide composition.

Examples of electrolytes according to the present invention together with processes for making them will now be given:

Example I

7.85 parts-by-weight of a dry, powdered calcium iodide was blended with 2.15 parts-by-weight of dry, powdered lithium orthophosphate to give a composition containing, in mole percent, 35.3% of lithium, 11.8% of phosphate, 17.6% calcium and 35.3% iodine. The blended mixture was heated at 800°C for about 1/2 an hour and ground to a powder. Conductivity of the thus formed electrolyte was about $8\times10^{-6}$ (ohm cm)$^{-1}$ at room temperature (25°C).

Example II

$Al_2O_3$ powder (grade H51 Alcoa) was blended and ground with a portion of the electrolyte as prepared in Example I and the ground blend was heated for 20 minutes at 500°C quenched and powdered. The final composition comprised, in mole percent, about 24.5% of lithium, 8.2% of phosphate, 12.2% of calcium, 24.5% of iodine, 12.2% of aluminium and 18.4% of oxygen (on an atom basis) not combined in the phosphate radical. Conductivity of this electrolyte at room temperature was about $2\times10^{-5}$ (ohm cm)$^{-1}$. A 250 mA hr solid state cell was fabricated using this novel electrolyte with lithium as an anode and a mixture of $BiBr_3$, $TiS_2$ and Bi as the cathode. The room temperature open circuit potential of this cell was about 2.6 volts. Upon discharge at 100°C under a 9.8 kolo-ohm external load, the cell exhibited a potential of greater than 2.0 volts after 100 mA hr of discharge.

Example III

1.39 parts-by-weight of LiI, 4.21 parts-by-weight of $AlI_3$, 1.2 parts-by-weight of $Li_3PO_4$ and 3.2 parts-by-weight of $Al_2O_3$ were blended, heated at 300°C for 1 hour then at 500°C for 1/2 an hour, quenched and powdered, and finally reheated at 800°C for 1/2 hour more and again quenched and powdered. The final composition was, in mole percent, 16% of lithium, 4% of phosphate, 16% of iodine, 28% of aluminium and 36% of oxygen (on an atom basis) not combined in the phosphate radical. Conductivity at room temperature was $8.5\times10^{-6}$ (ohm-cm)$^{-1}$. The conductivity cell (Li/electrolyte/Li) was kept at 150°C for several days with no change in conductivity (measured at room temperature), thus indicating stability of the electrolyte to lithium.

Example IV

A number of electrolyte compositions made by reacting lithium orthophosphate and calcium iodide were tested for conductivity. These compositions were made by drying lithium phosphate in a vacuum at 120°C and dry calcium iodide at a sequence of temperatures, the last being 150°C in a vacuum. Appropriate quantities of these dried materials were ground together for two hours. The ground mixtures were then fired in alumina crucibles at 900°C for 1 to 2 hours. After firing and cooling the resultant masses were crushed ground to fine powders capable of passing 100% through sieves having openings of about 0.44 mm and pressed to thin tablet form. Conductivities were measured on these pressed tablets between two lithium electrodes at 29°C. The following Table sets forth the results.

TABLE

| Mole % of $CaI_2$ in $CaI_2$—$Li_3PO_4$ mixture | Conductivity (ohm-cm)$^{-1}$ Minimum | Maximum |
|---|---|---|
| 40 | $1.25\times10^{-7}$ | $2.3\times10^{-7}$ |
| 50 | $9.6\times10^{-7}$ | $2.3\times10^{-6}$ |
| 55 | $2.6\times10^{-6}$ | $3\times10^{-6}$ |
| 60 | $4.3\times10^{-6}$ | $5.4\times10^{-6}$ |
| 65 | $6.2\times10^{-6}$ | $6.3\times10^{-6}$ |
| 70 | $1.9\times10^{-6}$ | $2.2\times10^{-6}$ |
| 80 | $6.6\times10^{-7}$ | $8\times10^{-7}$ |

By interpolating from the results of the foregoing Table it can be seen that in the range of 45 to 80 mole percent of $CaI_2$ and 20 to about 55 mole percent of $Li_3PO_4$ in binary mixtures employed in making the electrolytes of the present invention, the room temperature conductivities exceed about $5\times10^{-7}$ (ohm-cm)$^{-1}$. An even more advantageous range of $CaI_2$ in these binary mixtures to give room temperature conductivities greater than about $1.5\times10^{-6}$ (ohm-cm)$^{-1}$ is 50 to 70 or 73 mole percent. Maximum conductivities were obtained at about 65 mole percent of $CaI_2$, that is, in mole percentages of electrolyte, about 31.3% of lithium, about 10.4% of phosphate, about 19.4% of calcium and about 38.8% of iodine.

**Claims**

1. A solid state electrolyte for use in a solid state electrochemical call having a lithium anode, which electrolyte comprises, in mole percent, from 10 to 50% iodine, from 8 to 47% lithium, from 3 to 16% phosphate, and from 5 to 30% in total of one or both of calcium and aluminium, said electrolyte being in the form of an interdiffused composition of said constituents and said constituents being in stoichiometric metallic to non-metallic relationship.

2. An electrolyte as claimed in claim 1, which includes up to 38 molar % oxygen (calculated on the basis of atomic oxygen) apart from the oxygen contained in the phosphate.

3. An electrolyte as claimed in claim 1, which consists of, in mole percentages, from 25% to 43% lithium, from 8% to 14.5% phosphate, from 14% to 23% calcium and from 28% to 45% iodine.

4. An electrolyte as claimed in claim 3, which consists, in mole percent, of about 31.3% lithium, about 10.4% phosphate, about 19.4% calcium and about 38.8% iodine.

5. A solid state electrochemical cell having a lithium anode, a cathode and an electrolyte as defined in any one of claims 1 to 4.

6. A process of making an electrolyte for use in a solid state electrochemical cell, which process comprises interdiffusing quantities of lithium orthophosphate, one or more of calcium iodide, lithium aluminium iodide, and aluminium iodide to provide an interdiffused composition comprising, in mole percent, from 10% to 50% iodine, from 8% to 47% lithium, from 3 to 16% phosphate, and from 5 to 30% in total of one or both of calcium and aluminium.

7. A process as claimed in claim 6, wherein lithium iodide is interdiffused with the other ingredients to produce the interdiffused composition.

8. A process as claimed in claim 7 or claim 8, wherein the interdiffused composition contains up to 38% oxygen (apart from the oxygen in the phosphate) and wherein aluminium oxide is interdiffused with the other ingredients to produce the interdiffused composition.

9. A process as claimed in claim 6, wherein the interdiffused composition comprises, in mole percent, from 25% to 43% lithium, from 8% to 14.5% phosphate, from 14% to 23% calcium and from 28% to 45% iodine.

10. A process as claimed in any one of claims 6 to 9, wherein the interdiffusion takes place at a temperature in excess of the melting point of the lowest melting ingredient but below that temperature at which all ingredients melt for about 0.25 to about 3 hours.

**Patentansprüche**

1. Feststoff-Elektrolyt für eine elektochemische Feststoffzelle mit einer Lithiumanode, der 10 bis 50 Mol-% Jod, 8 bis 47 Mol-% Lithium, 3 bis 16 Mol-% Phosphat und insgesamt 5 bis 30 Mol-% Calcium und/oder Aluminium aufweist und der die Form einer interdiffundierten Zusammensetzung seiner Bestandteile, die in stöchiometrischem Metall zu Nichtmetall-Verhältnis vorliegen, hat.

2. Elektrolyt nach Anspruch 1, der bis zu 30 Mol-% Sauerstoff (berechnet auf der Basis von atomarem Sauerstoff) neben dem im Phosphat vorhandenen Sauerstoff aufweist.

3. Elektrolyt nach Anspruch 1, der 25 bis 43 Mol-% Lithium, 8 bis 14.5 Mol-% Phosphat, 14 bis 23 Mol-% Calcium und 28 bis 45 Mol-% Jod aufweist.

4. Elektrolyt nach Anspruch 3, der etwa 31, Mol-% Lithium, etwa 10,4 Mol-% Phosphat, etwa 19,4 Mol-% Calcium und etwa 38,8 Mol-% Jod enthält.

5. Feststoffzelle mit einer Lithiumanode, einer Cathode und einem Elektrolyten nach einem der Ansprüche 1 bis 4.

6. Verfahren zur Herstellung eines Elektrolyten für eine elektrochemische Feststoffzelle, bei dem Mengen von Lithium-Orthophosphat, eine oder mehrere von Calciumiodid, Lithium-Aluminiumiodid und Aluminiumiodid zur Bildung einer interdiffundierten Zusammensetzung aus 10 bis 50 Mol-% Jod, 8 bis 47 Mol-% Lithium, 3 bis 16 Mol-% Phosphat und insgesamt 5 bis 30 Mol-% Calcium und/oder Aluminium aufweist, interdiffundiert werden.

7. Verfahren nach Anspruch 6, bei dem Lithiumiodid mit den anderen Bestandteilen zur Bildung einer interdiffundierten Zusammensetzung interdiffundiert wird.

8. Verfahren nach Anspruch 7 oder 8, bei dem die interdiffundierte Zusammensetzung bis zu 38% Sauerstoff neben dem Sauerstoff des Phosphats enthält und bei dem Aluminiumoxid mit den anderen Bestandteilen zur Bildung einer interdiffundierten Zusammensetzung interdiffundiert wird.

9. Verfahren nach Anspruch 6, bei dem die interdiffundierte Zusammensetzung 25 bis 43 Mol-% Lithium, 8 bis 14,5 Mol-% Phosphat, 14 bis 23 Mol-% Calcium und 28 bis 45 Mol-% Jod aufweist.

10. Verfahren nach einem der Ansprüche 6 bis 9, bei welchem die Interdiffusion bei einer den Schmelzpunkt des niedrigst schmelzenden Bestandteils übersteigenden Temperatur jedoch unterhalb der Temperatur, bei welcher alle Bestandteile schmelzen, während 0,25 bis etwa 3 Stunden vorgenommen wird.

**Revendications**

1. Electrolyte solide pour l'emploi dans une cellule électrochimique solide ayant une anode en lithium, cet électrolyte comprenant en pourcentage molaire de 10 à 50% d'iode, de 8 à 47% de lithium, de 3 à 16% de phosphate et de 5 à 30% au total de calcium ou d'aluminium ou des deux, ledit électrolyte étant sous forme d'une composition interdiffusée desdits constituants et

lesdits constituants étant dans un rapport stoechiométrique métallique à non-métallique.

2. Electrolyte selon la revendication 1, qui comprend jusqu'à 38% molaire d'oxygène (calculé sur la base de l'oxygène atomique) indépendamment de l'oxygène contenu dans le phosphate.

3. Electrolyte selon la revendication 1, qui consiste, en pourcentage molaire, en 25 à 43% de lithium, 8 à 14,5% de phosphate, 14 à 23% de calcium et 28 à 45% d'iode.

4. Electrolyte selon la revendication 3, qui consiste, en pourcentage molaire 31,3% de lithium, environ 10,4% de phosphate, environ 19,4% de calcium et environ 38,8% d'iode.

5. Cellule électrochimique solide ayant une anode de lithium, une cathode et un électrolyte tel que défini dans l'une quelconque des revendications 1 à 4.

6. Procédé de fabrication d'un électrolyte pour l'utilisation dans une cellule électrochimique solide, ce procédé comprenant l'interdiffusion de quantités d'orthophosphate de lithium, d'un ou plusieurs des composés iodure de calcium, iodure de lithium aluminium, et iodure d'aluminium, pour fournir une composition interdiffusée comprenant, en pourcentage molaire de 10 à 50% d'iode, de 8 à 47% de lithium, de 3 à 16% de phosphate, et de 5 à 30% au total de calcium ou d'aluminium ou des deux.

7. Procédé selon la revendication 6, caractérisé en ce que l'iodure de lithium est interdiffusé avec les autres ingrédients pour produire la composition interdiffusée.

8. Procédé selon la revendication 6 ou 7, caractérisé en ce que la composition interdiffusée contient jusqu'à 38% d'oxygène (indépendamment de l'oxygène dans le phosphate) et en ce que l'oxyde d'aluminium est interdiffusé avec les autres ingrédients pour produire la composition interdiffusée.

9. Procédé selon la revendication 6, caractérisé en ce que la composition interdiffusée comprend, en pourcentage molaire de 25 à 43% de lithium, de 8 à 14,5% de phosphate, de 14 à 23% de calcium et de 28 à 45% d'iode.

10. Procédé selon l'une quelconque des revendications 6 à 9, caractérisé en ce que l'interdiffusion est réalisée à une température excèdant le point de fusion de l'ingrédient ayant le plus bas point de fusion mais inférieure à la température à laquelle tous les ingrédients fondent en un temps d'environ 0,25 à environ 3 heures.